(19)

**Europäisches Patentamt**
**European Patent Office**
**Office européen des brevets**

(11) **EP 3 235 841 B1**

(12) **EUROPEAN PATENT SPECIFICATION**

(45) Date of publication and mention
of the grant of the patent:
**11.11.2020 Bulletin 2020/46**

(21) Application number: **15870296.9**

(22) Date of filing: **15.12.2015**

(51) Int Cl.:
*C08F 36/04* (2006.01)      *C08F 279/02* (2006.01)
*C08F 2/22* (2006.01)      *C08F 2/38* (2006.01)
*C08F 279/04* (2006.01)      *C08F 36/06* (2006.01)
*C08K 5/37* (2006.01)      *C08F 2/44* (2006.01)

(86) International application number:
**PCT/KR2015/013752**

(87) International publication number:
**WO 2016/099129 (23.06.2016 Gazette 2016/25)**

(54) **METHOD FOR PREPARING DIENE-BASED RUBBER POLYMER**

VERFAHREN ZUR HERSTELLUNG VON DIENBASIERTEM KAUTSCHUKPOLYMER

PROCÉDÉ DE PRÉPARATION D'UN POLYMÈRE CAOUTCHOUTEUX À BASE DE DIÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2014 KR 20140181126**

(43) Date of publication of application:
**25.10.2017 Bulletin 2017/43**

(73) Proprietor: **LG Chem, Ltd.
Seoul 07336 (KR)**

(72) Inventors:
• **KIM, Yoo Vin**
**Daejeon 34122 (KR)**
• **KIM, Young Min**
**Daejeon 34122 (KR)**
• **LEE, Jin Hyoung**
**Daejeon 34122 (KR)**
• **HAN, Su Jeong**
**Daejeon 34122 (KR)**
• **JEONG, Young Hwan**
**Daejeon 34122 (KR)**
• **CHUNG, Sun Haeng**
**Daejeon 34122 (KR)**
• **SUK, Jae Min**
**Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
GB-A- 1 408 819      KR-A- 20060 119 255
KR-A- 20070 047 072      KR-A- 20100 038 700
KR-A- 20100 043 303      KR-A- 20130 078 367

**Description**

**TECHNICAL FIELD**

[Technical Field]

The present invention relates to a method for preparing a diene-based rubber polymer having relatively low gel content and high swelling index while having high polymerization conversion rate.

**BACKGROUND ART**

In general, an acrylonitrile-butadiene-styrene (hereinafter, called 'ABS')-based resin is widely used to electricity, electronic parts, office machines, car parts and the like due to its relatively good properties such as impact resistance, mechanical strength, moldability, gloss and the like.

The ABS-based resin is much influenced by properties such as average particle diameter and the like of diene-based rubber latex as a rubber ingredient. For example, properties of the ABS-based resin may vary depending on average particle diameter, gel content and swelling index of the diene-based rubber latex.

Specifically, the ABS-based resin is commonly prepared by an emulsion polymerization method. Diene-based rubber latex is prepared by the emulsion polymerization method to provide impact strength, an aromatic vinyl compound and a vinyl cyanide compound are added thereto and subjected to graft reaction by the emulsion polymerization method to prepare an acrylonitrile-butadiene-styrene graft copolymer, and then a styreneacrylonitrile copolymer (hereinafter, SAN) is mixed to the graft copolymer to finally prepare thermoplastic ABS resin.

In this case, the diene-based rubber polymer can be advantageously applied to the production of ABS-based resin when polymerization conversion rate reaches 90% or higher, and when the polymerization conversion rate of the diene-based rubber polymer is 90% or higher, the polymer may have gel content of 90% to 95% and swelling index of 14 to 20.

The gel content and the swelling index are closely related to the polymerization conversion rate and a polymerization reaction temperature. For example, in order to increase the polymerization conversion rate, polymerization is conducted at a relatively high temperature, and therefore, the gel content is rapidly increased but the swelling index is largely decreased as the polymerization conversion rate improves. When the gel content is high, transparency may be increased due to low swelling index but impact resistance may be decreased. On the contrary, when the gel content is too low but the swelling index is too high, the impact resistance may be improved but the transparency may be decreased. Thus, in order to obtain ABS-based resin having excellent properties, a diene-based rubber polymer having properly controlled polymerization conversion rate, particle diameter, gel content and swelling index is required.

References of the Related Art

Korean Patent Publication No. 10-1279267

KR 10-2006-0119255 A discloses a method for preparing a polybutadiene rubber latex and indicates that a polybutadiene rubber latex having an average diameter of 3080 Å and a gel content of 78% is prepared by: simultaneously injecting 75 parts by weight of ion exchanged water, 80 parts by weight of 1,3-butadiene as a monomer, 1.5 parts by weight of an emulsifier, 0.7 parts by weight of an electrolyte, 0.3 parts by weight of a molecular weight controller to react the same at a temperature of 65°C; simultaneously injecting 20 parts by weight of the remaining monomer, 1,3-butadiene, and 0.05 parts by weight of a molecular weight controller thereinto to react the same at a temperature of 70°C; and then terminating the reaction.

KR 10-2010-0043303 A discloses a graft polymer obtained by graft copolymerizing a monomer mixture, which comprises an aromatic vinyl compound and a vinyl cyano compound, to a rubber polymer comprising a seed having an average particle diameter of 500-1000 Å and a core having an average particle diameter of 2000-5000 Å. The graft polymer is prepared by continuously injecting an emulsion solution comprising 10 parts by weight of acryl nitrile and 30 parts by weight of styrene, which are mixed in a separate mixing device, into 60 parts by weight of a rubbery latex to react the same, and the grafting rate of the graft polymer is 42%.

KR 2007 0047072 A discloses a method for preparing a butadiene rubber polymer, whereby the method comprises the step of polymerizing 60 parts per weight of 1,3-butadiene in the presence of 2 parts per weight of emulsifier and 0.3 parts by weight dodecyl mercaptan at a reaction temperature of 70°C.

GB 1408819 A discloses a method for preparing a butadiene rubber polymer, whereby the method comprises a step of polymerizing 25 parts per weight of 1,3-butadiene in the presence of 1.2 parts per weight of emulsifier and 0.07 parts per weight t-dodecyl mercaptan at a reaction temperature of 65°C.

# DISCLOSURE OF THE INVENTION

## TECHNICAL PROBLEM

In order to solve the above problems, one object of the present invention is to provide a method for preparing a diene-based rubber polymer having relatively low gel content and high swelling index while having high polymerization conversion rate.

## TECHNICAL SOLUTION

In order to accomplish the objects described above, the present invention provides a method for preparing a diene-based rubber polymer comprising:

a step of adding 50 parts by weight to 75 parts by weight of a conjugated diene-based monomer which is a single material or a monomer mixture comprising the conjugated diene-based monomer as a major ingredient, 1 part by weight to 4 parts by weight of an emulsifier and 0.1 parts by weight to 0.5 parts by weight of a molecular weight control agent into a reactor, and then subjecting thereof to a first polymerization (Step 1);
a step of continuously adding 25 parts by weight to 50 parts by weight of a conjugated diene-based monomer for 0.5 hour to 10 hours at the time point of polymer conversion rate of 10% to 40% in the (Step 1), and then subjecting thereof to a second polymerization (Step 2); and
a step of terminating the polymerization at the time point of polymer conversion rate of 92% or higher in the (Step 2) (Step 3),
wherein 0.01 parts by weight to 0.3 parts by weight of a molecular weight control agent is further added at the time point of the polymerization conversion rate of the second polymerization step of 55% to 70%,
the first polymerization is conducted at a temperature range from 60°C to 72°C,
the second polymerization is conducted at a temperature range from 72°C to 85°C.

Further provided is a diene-based rubber polymer prepared from the method.

Moreover provided is an acrylonitrile-butadiene-styrene graft copolymer of core-shell structure, wherein the core comprises the diene-based rubber polymer, the shell comprises an aromatic vinyl compound and a vinyl cyanide compound, and weight ratio of the aromatic vinyl compound and a vinyl cyanide compound constituting the shell (aromatic vinyl compound: vinyl cyanide compound) is 5:1 to 1:5.

Further embodiments are disclosed in the dependent claims. **ADVANTAGEOUS EFFECTS**

The method for preparing a diene-based rubber polymer according to the present invention can have high polymerization conversion rate by further adding a molecular weight control agent at the time point of the polymerization conversion rate of 40% to 85%, and then conducting polymerization reaction at the first and the second temperature ranges, not conducting the reaction at a single temperature, to control cross-linking reaction.

Further, the diene-based rubber polymer prepared according to the present invention may have improved swelling index while having low gel content, and the acrylonitrile-butadiene-styrene graft copolymer of core-shell structure comprising the same may have further improved impact strength characteristic.

Thus, the method for preparing a diene-based rubber polymer of the present invention and the acrylonitrile-butadiene-styrene graft copolymer of core-shell structure comprising the diene-based rubber polymer prepared by the method can be easily applied to the industries requiring them, in particular, an impact reinforcing agent industry.

## BEST MODE FOR CARRYING OUT THE INVENTION

Hereinafter, the present invention will be described in more detail in order to help the understanding of the present invention.

In this case, it should be understood that the terms or words used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

The present invention provides a method for preparing a diene-based rubber polymer, which can have low gel content and high swelling index while having high conversion rate, so that the polymer can be easily applied as a rubber ingredient of an acrylonitrile-butadiene-styrene graft copolymer of core-shell structure.

According to the present invention the method for preparing a diene-based rubber polymer comprises:

a step of adding 50 parts by weight to 75 parts by weight of a conjugated diene-based monomer which is a single material or a monomer mixture comprising the conjugated diene-based monomer as a major ingredient, 1 part by weight to 4 parts by weight of an emulsifier and 0.1 parts by weight to 0.5 parts by weight of a molecular weight control agent into a reactor, and then subjecting thereof to a first polymerization (Step 1);

a step of continuously adding 25 parts by weight to 50 parts by weight of a conjugated diene-based monomer for 0.5 hour to 10 hours at the time point of polymer conversion rate of 10% to 40% in the (Step 1), and then subjecting thereof to a second polymerization (Step 2); and

a step of terminating the polymerization at the time point of polymer conversion rate of 92% or higher in the (Step 2) (Step 3),

wherein 0.01 parts by weight to 0.3 parts by weight of a molecular weight control agent is further added at the time point of the polymerization conversion rate of the second polymerization step of 55% to 70%,

the first polymerization is conducted at a temperature range from 60°C to 72°C,

the second polymerization is conducted at a temperature range from 72°C to 85°C.

The step 1 is a step of mixing the conjugated diene-based monomer, the emulsifier and the molecular weight control agent and initiating polymerization by adding the conjugated diene-based monomer 50 parts by weight to 75 parts by weight, the emulsifier 1 part by weight to 4 parts by weight and the molecular weight control agent 0.1 part by weight to 0.5 part by weight into the reactor, and then subjecting thereof to the first polymerization.

In the present invention, the conjugated diene-based monomer is a single material of a conjugated diene-based monomer, or a monomer mixture comprising the conjugated diene-based monomer as a major ingredient, an aromatic vinyl-based monomer, a vinyl cyanide-based monomer and the like.

The monomer mixture may comprise the conjugated diene-based monomer 55 wt% to 99.7 wt%; the aromatic vinyl-based monomer 0.1 wt% to 40 wt%; and the vinyl cyanide-based monomer 0.1 wt% to 40 wt%.

The conjugated diene-based monomer is not particularly limited, and for example, it may be at least one selected from the group consisting of 1,3-butadiene, isoprene, chloroprene and piperylene. Specifically, it may be 1,3-butadiene.

Further, the aromatic vinyl-based monomer is not particularly limited, and for example, it may be at least one selected from the group consisting of styrene, $\alpha$-methyl styrene, $\alpha$-ethyl styrene and p-methyl styrene. Specifically, it may be styrene.

Further, the vinyl cyanide-based monomer is not particularly limited, and for example, it may be at least one selected from the group consisting of acrylonitrile, methacrylonitrile and ethacrylonitrile. Specifically, it may be acrylonitrile.

The emulsifier is not particularly limited, and for example, an anionic adsorption-type emulsifier such as potassium rosinate, potassium fatty acid salt, sodium lauryl sulfonate, sodium alkylbenzene sulfonate and the like, a non-ionic emulsifier such as polyoxyethylene alkylphenyl ether and the like, a reactive emulsifier such as sodium dodecyl allyl sulfosuccinate, $C_{16-18}$ alkenyl dipotassium succinate, sodium acrylamido stearate and the like, and a polymeric reactive emulsifier such as polyoxyethylene alkyl phenyl ether ammonium sulfate, polyoxyethylene alkyl ether sulfate ester ammonium salt and the like may be used alone or in combination.

The molecular weight control agent is not particularly limited, and for example, it may be mercaptans such as a-methyl styrene dimer, t-dodecyl mercaptan, n-dodecyl mercaptan and octyl mercaptan, halogenated hydrocarbon such as carbon tetrachoride, methylene chloride and methylene bromide, and sulfur-containing compounds such as tetraethyl thiuram disulfide, dipentamethylene thiuram disulfide and diisopropylxanthogen disulfide. Preferably, it may be t-dodecyl mercaptan.

The first polymerization may be conducted in the presence of at least one additive of ion exchanged water, a polymerization initiator and an electrolyte as occasion demands. In this case, the use amounts of the ion exchanged water, the polymerization initiator and the electrolyte are not particularly limited, and for example, the ion exchanged water may be used at 65 parts by weight to 100 parts by weight, the polymerization initiator may be used at 0.2 part by weight to 0.4 part by weight, and the electrolyte may be used at 0.2 part by weight to 3 parts by weight.

The polymerization initiator may be a common polymerization initiator known in the art without particular limitation, and for example, it may be a water-soluble polymerization initiator such as persulfate, a lipid-soluble polymerization initiator such as a peroxide compound, an oxidation-reduction catalyst and the like.

The persulfate may be potassium persulfate, sodium persulfate, ammonium persulfate and the like, and the lipid-soluble polymerization initiator may be cumene hydroperoxide, diisopropyl benzene hydroperoxide, azobis isobutylnitrile, tertiary butyl hydroperoxide, paramethane hydroperoxide, benzoylperoxide and the like. Further, the oxidation-reduction catalyst may be sodium formaldehyde, sulfoxylate, sodium ethylenediamine tetraacetate, ferrous sulfate, dextrose, sodium pyrophosphate, sodium sulfite and the like.

The electrolyte may be KCl, NaCl, $KHCO_3$, $NaHCO_3$, $K_2CO_3$, $Na_2CO_3$, $K_2SO_4$, $Na_2SO_4$, $KHSO_3$, $NaHSO_3$, $K_4P_2O_7$, $Na_4P_2O_7$, $K_3PO_4$, $Na_3PO_4$, $K_2HPO_4$, $Na_2HPO_4$ and the like.

The second polymerization is a step of continuously adding the conjugated diene-based monomer 25 parts by weight to 50 parts by weight for 0.5 hour to 10 hours at the time point that the polymerization conversion rate of the first polymerization is 10% to 40%.

As mentioned above, the preparation method according to the present invention can easily form the diene-based rubber polymer having proper particle diameter by adding the conjugated diene-based monomer in two steps (simultaneous addition and continuous addition) according to the time point of the polymerization conversion rate.

Further, the preparation method of the present invention further comprises a step of further adding the molecular weight control agent of 0.01 part by weight to 0.3 part by weight at the time point that the polymerization conversion rate of the second polymerization step is 55% to 70% in the (Step 2). The preparation method according to the present invention can inhibit cross-linking reaction by further adding the molecular weight control agent at the time point of the polymerization conversion rate of 40% to 85%, thereby inhibiting gel content increase and swelling index decrease while increasing the polymerization conversion rate. Accordingly, as a result, a diene-based rubber polymer having low gel content and relatively high swelling index while having high polymerization conversion rate can be obtained. Further, the molecular weight control agent may be the same or different with the molecular weight control agent as described above.

On the other hand, according to the present invention, the first polymerization and the second polymerization may be conducted under different temperature conditions, respectively.

Specifically, the first polymerization is conducted under a temperature condition of 60°C to 72°C, and the second polymerization is conducted under a temperature condition of 72°C to 85°C. Namely, in the present invention, the polymerization may be conducted by gradually increasing the temperature condition as the polymerization progresses.

The (Step 3) is a step of terminating polymerization at the time point that the polymerization conversion rate of the second polymerization is 92% or higher in order to obtain the diene-based rubber polymer.

The step of terminating the polymerization may be conducted by using a polymerization inhibitor, and the polymerization inhibitor may be a common polymerization inhibitor known in the art.

Further, provided is a diene-based rubber polymer prepared by the preparation method as described above.

The diene-based rubber polymer may have average particle diameter (D50) of 2,600 Å to 5,000 Å, gel content of 70% to 84%, and swelling index of 11 to 25.

Herein, the Å is a unit of length used to represent wavelength of an electromagnetic radiation, and 1 Å is equal to 0.1 nm.

The gel content represents degree of cross-link in a polymer, i.e., degree of cross-linking of a polymer, and as the gel content value is larger, the degree of cross-linking of a polymer may be higher.

The swelling index represents degree of swelling of a polymer by a solvent, and as the degree of cross-linking of a polymer is higher, the swelling index may be lower.

Moreover, provided is an acrylonitrile-butadiene-styrene copolymer comprising the diene-based rubber polymer.

Provided is the acrylonitrile-butadiene-styrene graft copolymer of core-shell structure characterized that the core comprises the diene-based rubber polymer,

the shell comprises the aromatic vinyl compound and the vinyl cyanide compound, and

weight ratio of the aromatic vinyl compound and the vinyl cyanide compound constituting the shell (aromatic vinyl compound : vinyl cyanide compound) is 5:1 to 1:5.

In this case, the weight ratio of the core and the shell may be 30 parts by weight: 70 parts by weight to 70 parts by weight: 30 parts by weight.

If the core is contained in the copolymer in an amount of less than 30 parts by weight, characteristics of the finally formed acrylonitrile-butadiene-styrene copolymer may be decreased, for example, it may harden. And if it is contained in an amount of greater than 70 parts by weight, because the shell content is relatively reduced, there may be problems that oil resistance of the finally formed acrylonitrile-butadiene-styrene copolymer may be decreased and its tensile strength may be reduced.

Further, if the shell is contained in the copolymer in an amount of less than 30 parts by weight, oil resistance of the finally formed acrylonitrile-butadiene-styrene copolymer may be decreased and its tensile strength may be reduced. And if the shell is contained in an amount of greater than 70 parts by weight, because the core part is relatively decreased, the finally formed acrylonitrile-butadiene-styrene copolymer may harden.

Further, the copolymer of the present invention may be the one having graft rate of 15% to 40%, and weight average molecular weight of free rubber extracted from the dried copolymer powder may be 25,000 to 65,000.

On the other hand, the acrylonitrile-butadiene-styrene copolymer can be prepared by a common method known in the art without particular limitation, and for example, it may be prepared by adding additives such as the aromatic vinyl compound, the vinyl cyanide compound and the emulsifier to the diene-based rubber polymer, subjecting thereof to emulsion polymerization, and then coagulating and washing thereof. In this case, each of components can be involved in the reaction by a method of adding the components to the reactor simultaneously, a method of continuously adding thereof or a method of firstly adding a part of the components and then adding the rest of them after initiating polymerization.

Further, in order to easily achieving the emulsion polymerization, as occasion demands, an additive such as a chelating agent, a dispersing agent, a pH adjusting agent, an oxygen absorber, a particle diameter control agent, an antioxidant and an oxygen scavenger can be further used, and the emulsion polymerization may be commonly conducted at a temperature range from 10°C to 90°C, and preferably at a temperature range from 25°C to 75°C.

Further, the coagulation is to form acrylonitrile-butadiene-styrene copolymer latex coagulates by coagulating the acrylonitrile-butadiene-styrene copolymer latex composition formed after the emulsion polymerization, and it can be conducted by a common method known in the art, for example by treating aqueous base solution or aqueous acid solution to the composition and then subjecting thereof to base coagulation or acid coagulation.

The washing is to obtain the acrylonitrile-butadiene-styrene copolymer by removing impurities (residual emulsifier, coagulating agent and the like) from the acrylonitrile-butadiene-styrene copolymer latex coagulates formed by the base coagulation or the acid coagulation, and it may be conducted by adding the coagulates to aqueous inorganic salt solution and then washing and drying thereof.

In this case, the washing and the drying may be conducted by a common method known in the art without particular limitation.

**MODE FOR CARRYING OUT THE INVENTION**

Hereinafter, the present invention will be described in more detail, according to the following Examples and Test Examples. However, the following Examples and Test Examples are merely presented to exemplify the present invention, and the scope of the present invention is not limited thereto.

**Example**

**Example 1**

1) Preparation of Diene-Based Rubber Polymer

Ion exchanged water 65 parts by weight, 1,3-butadiene 70 parts by weight, potassium rosinate 1.5 parts by weight, potassium oleate 0.8 part by weight, potassium carbonate ($K_2CO_3$) 0.8 part by weight, tertiary dodecyl mercaptan (TDDM) 0.3 part by weight and potassium persulfate ($K_2S_2O_8$) 0.3 part by weight were simultaneously added into a nitrogen-substituted polymerization reactor (Autoclave), and then reacted at 70°C until polymerization conversion rate reached 30% (first polymerization). Then, 1,3-butadiene 30 parts by weight was continuously added for 6 hours, and then reaction temperature was slowly raised for 10 hours from the time point of continuous addition until the temperature reached 80°C (second polymerization). In this case, when the polymerization conversion rate reached 55%, the tertiary dodecyl mercaptan 0.05 part by weight was further added thereto and reacted. Then, when the polymerization conversion rate reached 93%, the reaction was terminated by adding a polymerization inhibitor, N,N-diethyl hydroxyl amine, so as to obtain a diene-based rubber polymer.

2) Preparation of Acrylonitrile-Butadiene-Styrene Copolymer

The diene-based rubber polymer prepared in the above 1) 60 parts by weight and ion exchanged 100 parts by weight were added to a nitrogen-substituted polymerization reactor, a mixed solution consisting of acrylonitrile 10 parts by weight, styrene 30 parts by weight, ion exchanged water 25 parts by weight, t-butyl hydroperoxide 0.12 part by weight, potassium rosinate 1.0 part by weight and tertiary dodecyl mercaptan 0.3 part by weight, which was mixed in a separate blending apparatus, was continuously added into the polymerization reactor at 70°C for 3 hours with dextrose 0.054 part by weight, sodium pyrophosphate 0.004 part by weight and ferrous sulfate 0.002 part by weight. After terminating the continuous addition, dextrose 0.05 part by weight, sodium pyrophosphate 0.03 part by weight, ferrous sulfate 0.001 part by weight and t-butyl hydroperoxide 0.05 part by weight were simultaneously added into the polymerization reactor , the temperature was raised for 1 hour up to 80°C, and then the reaction was terminated. The formed acrylonitrile-butadiene-styrene copolymer latex was coagulated with aqueous sulfuric acid, washed and then dried to obtain an acrylonitrile-butadiene-styrene copolymer powder.

**Comparative Example 1**

The procedure of Example 1 was repeated except for not further adding the tertiary dodecyl mercaptan when the polymerization conversion rate reached 55% during preparation of the diene-based rubber polymer to obtain acrylonitrile-butadiene-styrene copolymer powder.

**Comparative Example 2**

The procedure of Example 1 was repeated except for further adding the tertiary dodecyl mercaptan 0.05 parts by weight when the polymerization conversion rate reached 30% instead of 55% during preparation of the diene-based rubber polymer to obtain acrylonitrile-butadiene-styrene copolymer powder.

**Comparative Example 3**

The procedure of Example 1 was repeated except for adjusting the reaction temperature of the first polymerization to 85°C, and adjusting the reaction temperature of the second polymerization to 70°C by slowly lowering the temperature during preparation of the diene-based rubber polymer to obtain acrylonitrile-butadiene-styrene copolymer powder.

**Comparative Example 4**

The procedure of Example 1 was repeated except for adjusting the reaction temperature of the first polymerization to 75°C, and adjusting the reaction temperature of the second polymerization to 75°C, the same temperature with the first polymerization, during preparation of the diene-based rubber polymer to obtain acrylonitrile-butadiene-styrene copolymer powder.

**Test Example 1**

Properties of each of the diene-based rubber polymers and the acrylonitrile-butadiene-styrene copolymers prepared in Example and Comparative Examples 1 to 4 were comparatively analyzed. The results were shown in the following Table 1.

1) Conversion Rate (%)

Conversion rate of each of the diene-based rubber polymers prepared in Example 1 and Comparative Examples 1 to 4 was measured, and comparatively analyzed.

2) Gel Content (%) and Swelling Index

Gel content of each of the diene-based rubber polymers prepared in Example 1 and Comparative Examples 1 to 4 was measured, and comparatively analyzed.
To measure the gel content, toluene 100 g was added to each diene-based rubber polymer 1 g and stored in a darkroom of room temperature for 48 hours, and then the part not dissolved in the toluene was collected. The gel content was calculated by the following formula.

$$\text{Gel Content (\%)} = \frac{Weight\ of\ insoluble\ gel}{Weight\ of\ sample} \times 100$$

$$\text{Swelling Index} = \frac{Weight\ of\ swollen\ gel}{Weight\ of\ gel}$$

3) Weight Average Molecular Weight of Free Rubber

Weight average molecular weight and molecular weight distribution of free rubber (the part not cross-linked thereby extracted out), which was extracted from each acrylonitrile-butadiene-styrene copolymer powder prepared in Example 1 and Comparative Examples 1 to 4.
Each extracted free rubber was dissolved in THF (tetrahydrofuran), and then the weight average molecular weight and the molecular weight distribution were measured using a gel permeation chromatography (GPC) analyzer.

4) Impact Strength

In order to analyze the effect of each of the acrylonitrile-butadiene-styrene copolymers prepared in Example 1 and Comparative Examples 1 to 4 on improving impact strength, the impact strength of each copolymer was measured.

To measure the impact strength, each acrylonitrile-butadiene-styrene copolymer 27.5 parts by weight and styrene-acrylate copolymer (SAN, 92HR, LG Chem, Ltd.) 72.5 parts by weight were mixed in a blender and then pelleted using an extruder.

Each pellet was prepared as a test specimen with thickness of 1/4 inch, and then the impact strength (kgfcm/cm) was measured according to ASTM D256.

[Table 1]

| Section | Diene-based rubber polymer | | | | Acrylonitrile-butadiene-styrene copolymer | | |
|---|---|---|---|---|---|---|---|
| | Conversion rate (%) | Reaction time (hr) | Gel content (%) | Swelling index | Free rubber weight average molecular weight | Free rubber molecular weight distribution | Impact strength (kgfcm/cm) |
| Example 1 | 93 | 21.5 | 79 | 17 | 31242 | 2.47 | 36 |
| Comp. Example 1 | 93 | 21 | 85 | 14 | 18590 | 1.81 | 32 |
| Comp. Example 2 | 93 | 22 | 81 | 16 | 28313 | 2.15 | 34 |
| Comp. Example 3 | 93 | 20 | 85 | 13 | 22307 | 2.09 | 31 |
| Comp. Example 4 | 86 | 28 | 74 | 18 | 33460 | 2.68 | 36 |

As shown in the Table 1, according to the present invention, under the polymerization reaction temperature condition divided into two steps, the case of Example 1, adding the tertiary dodecyl mercaptan 0.05 part by weight when the polymerization conversion rate reached 55% while raising the second polymerization reaction temperature from the first polymerization reaction temperature of 70°C to 80°C, showed lower gel content, higher swelling index and higher impact strength even at high conversion rate of 93%, compared to Comparative Example 1 not adding the tertiary dodecyl mercaptan.

On the other hand, the case of Comparative Example 2, adding the tertiary dodecyl mercaptan when the polymerization conversion rate reached 30%, less affected to the gel content and the swelling index, and less improved the impact strength, compared to Example 1. On the other hand, in the case of Comparative Example 3 lowering the reaction temperature from 85°C to 70°C, the gel content was not reduced, the swelling index was not increased, and the impact strength was decreased. The case of Comparative Example 4, constantly maintaining the reaction temperature to 75°C, showed low gel content, high swelling index and high impact strength. But Comparative Example 4 showed delayed reaction time and low polymerization conversion rate.

**Claims**

1. A method for preparing a diene-based rubber polymer comprising:

a step of adding 50 parts by weight to 75 parts by weight of a conjugated diene-based monomer which is a single material or a monomer mixture comprising the conjugated diene-based monomer as a major ingredient, 1 part by weight to 4 parts by weight of an emulsifier and 0.1 parts by weight to 0.5 parts by weight of a molecular weight control agent into a reactor, and then subjecting thereof to a first polymerization (Step 1);
a step of continuously adding 25 parts by weight to 50 parts by weight of a conjugated diene-based monomer for 0.5 hour to 10 hours at the time point of polymer conversion rate of 10% to 40% in the (Step 1), and then subjecting thereof to a second polymerization (Step 2); and
a step of terminating the polymerization at the time point of polymer conversion rate of 92% or higher in the (Step 2) (Step 3),
wherein 0.01 parts by weight to 0.3 parts by weight of a molecular weight control agent is further added at the time point of the polymerization conversion rate of the second polymerization step of 55% to 70%,
the first polymerization is conducted at a temperature range from 60°C to 72°C,

the second polymerization is conducted at a temperature range from 72°C to 85°C.

2. The method for preparing the diene-based rubber polymer of claim 1, wherein the first polymerization is conducted in the presence of at least one additive of ion exchanged water, a polymerization initiator and an electrolyte.

3. The method for preparing the diene-based rubber polymer of claim 1, wherein the monomer mixture comprises 55 wt% to 99.7 wt% of the conjugated diene-based monomer; 0.1 wt% to 40 wt% of an aromatic vinyl-based monomer; and 0.1 wt% to 40 wt% of a vinyl cyanide-based monomer.

4. The method for preparing the diene-based rubber polymer of claim 1, wherein the conjugated diene-based monomer is at least one selected from the group consisting of 1,3-butadiene, isoprene, chloroprene and piperylene.

5. The method for preparing the diene-based rubber polymer of claim 3, wherein the aromatic vinyl-based monomer is at least one selected from the group consisting of styrene, $\alpha$-methyl styrene, $\alpha$-ethyl styrene and p-methyl styrene.

6. The method for preparing the diene-based rubber polymer of claim 3, wherein the vinyl cyanide-based monomer is at least one selected from the group consisting of acrylonitrile, methacrylonitrile and ethacrylonitrile.

7. The method for preparing the diene-based rubber polymer of claim 1, wherein the step of terminating the polymerization is conducted by using a polymerization inhibitor.


**Patentansprüche**

1. Verfahren zum Herstellen eines Kautschukpolymers auf Dien-Basis, umfassend:

einen Schritt eines Zufügens von 50 Gewichtsteilen bis 75 Gewichtsteilen eines Monomers auf Basis von konjugiertem Dien, welches ein einzelnes Material oder eine Monomermischung umfassend das Monomer auf Basis von konjugiertem Dien als einen Hauptbestandteil ist, 1 Gewichtsteil bis 4 Gewichtsteilen eines Emulgators und 0,1 Gewichtsteilen bis 0,5 Gewichtsteilen eines Molekulargewichtssteuerungsmittels in einen Reaktor, und dann Unterziehen derselben einer ersten Polymerisation (Schritt 1);
einen Schritt eines kontinuierlichen Zufügens von 25 Gewichtsteilen bis 50 Gewichtsteilen eines Monomers auf Basis von konjugiertem Dien für 0,5 Stunden bis 10 Stunden zum Zeitpunkt einer Polymerumsetzungsrate von 10% bis 40% in (Schritt 1), und dann Unterziehen derselben einer zweiten Polymerisation (Schritt 2); und
einen Schritt eines Beendens der Polymerisation zum Zeitpunkt einer Polymerumsetzungsrate von 92% oder höher im Schritt (2) (Schritt 3),
wobei 0,01 Gewichtsteile bis 0,3 Gewichtsteile eines Molekulargewichtssteuerungsmittels ferner zum Zeitpunkt der Polymerisationsumsetzungsrate des zweiten Polymerisationsschritts von 55% bis 70% zugegeben werden,
die erste Polymerisation bei einem Temperaturbereich von 60°C bis 72°C durchgeführt wird,
die zweite Polymerisation bei einem Temperaturbereich von 72°C bis 85°C durchgeführt wird.

2. Verfahren zum Herstellen des Kautschukpolymers auf Dien-Basis nach Anspruch 1, wobei die erste Polymerisation in der Gegenwart mindestens eines Additivs aus Ionen-ausgetauschtem Wasser, einem Polymerisationsinitiator und einem Elektrolyten durchgeführt wird.

3. Verfahren zum Herstellen des Kautschukpolymers auf Dien-Basis nach Anspruch 1, wobei die Monomermischung 55 Gew.-% bis 99,7 Gew.-% des Monomers auf Basis von konjugiertem Dien; 0,1 Gew.-% bis 40 Gew.-% eines Monomers auf Basis von aromatischem Vinyl; und 0,1 Gew.-% bis 40 Gew.-% eines Monomers auf Basis von Vinylcyanid umfasst.

4. Verfahren zum Herstellen des Kautschukpolymers auf Dien-Basis nach Anspruch 1, wobei das Monomer auf Basis von konjugiertem Dien wenigstens eines ist, ausgewählt aus der Gruppe bestehend aus 1,3-Butadien, Isopren, Chlopren und Piperylen.

5. Verfahren zum Herstellen des Kautschukpolymers auf Dien-Basis nach Anspruch 3, wobei das Monomer auf Basis von aromatischem Vinyl wenigstens eines ist, ausgewählt aus der Gruppe bestehend aus Styrol, alpha-Methylstyrol, alpha-Ethylstyrol und p-Methylstyrol.

**6.** Verfahren zum Herstellen des Kautschukpolymers auf Dien-Basis nach Anspruch 3, wobei das Monomer auf Basis von Vinylcyanid wenigstens eines ist, ausgewählt aus der Gruppe bestehend aus Acrylnitril, Methacrylnitril und Ethacrylnitril.

**7.** Verfahren zum Herstellen des Kautschukpolymers auf Dien-Basis nach Anspruch 1, wobei der Schritt des Beendens der Polymerisation durch Verwendung eines Polymerisationsinhibitors durchgeführt wird.


**Revendications**

**1.** Procédé de préparation d'un polymère de caoutchouc à base de diène comprenant :

une étape consistant à ajouter entre 50 parties en poids et 75 parties en poids d'un monomère à base de diène conjugué lequel est un seul matériau ou un mélange de monomères comprenant le monomère à base de diène conjugué en tant qu'ingrédient majeur, entre 1 partie en poids et 4 parties en poids d'un émulsifiant et entre 0,1 partie en poids et 0,5 partie en poids d'un agent de régulation de la masse moléculaire dans un réacteur, puis à soumettre à une première polymérisation (Étape 1) ;
une étape consistant à ajouter en continu entre 25 parties en poids et 50 parties en poids d'un monomère à base de diène conjugué pendant 0,5 heure à 10 heures au moment où le taux de conversion du polymère est compris entre 10 % et 40 % (Étape 1), puis à le soumettre à une deuxième polymérisation (Étape 2) ; et
une étape consistant à terminer la polymérisation au moment où le taux de conversion du polymère est égal ou supérieur à 92 % (Étape 2) (Étape 3),
dans lequel entre 0,01 partie en poids et 0,3 partie en poids d'un agent de régulation de la masse moléculaire est ajoutée en plus au moment où le taux de conversion par polymérisation de l'étape de deuxième polymérisation est compris entre 55 % et 70 %,
la première polymérisation est effectuée dans une plage de température comprise entre 60°C et 72°C,
la deuxième polymérisation est effectuée dans une plage de température comprise entre 72°C et 85°C.

**2.** Procédé de préparation du polymère de caoutchouc à base de diène selon la revendication 1, dans lequel la première polymérisation est effectuée en présence d'un ou plusieurs additifs d'eau ayant subi un échange d'ions, un initiateur de polymérisation et un électrolyte.

**3.** Procédé de préparation du polymère de caoutchouc à base de diène selon la revendication 1, dans lequel le mélange de monomères comprend entre 55 % en poids et 99,7 % en poids du monomère à base de diène conjugué ; entre 0,1 % en poids et 40 % en poids d'un monomère à base de vinyle aromatique ; et entre 0,1 % en poids et 40 % en poids d'un monomère à base de cyanure de vinyle.

**4.** Procédé de préparation du polymère de caoutchouc à base de diène selon la revendication 1, dans lequel le monomère à base de diène conjugué est un ou plusieurs éléments sélectionnés dans le groupe constitué de 1,3-butadiène, isoprène, chloroprène et pipérylène.

**5.** Procédé de préparation du polymère de caoutchouc à base de diène selon la revendication 3, dans lequel le monomère à base de vinyle aromatique est un ou plusieurs éléments sélectionnés dans le groupe constitué de styrène, $\alpha$-méthyl styrène, $\alpha$-éthyl styrène et p-méthyl styrène.

**6.** Procédé de préparation du polymère de caoutchouc à base de diène selon la revendication 3, dans lequel le monomère à base de cyanure de vinyle est un ou plusieurs éléments sélectionnés dans le groupe constitué d'acrylonitrile, méthacrylonitrile et éthacrylonitrile.

**7.** Procédé de préparation du polymère de caoutchouc à base de diène selon la revendication 1, dans lequel l'étape de terminaison de la polymérisation est effectuée en utilisant un initiateur de polymérisation.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060119255 A
- KR 1020100043303 A
- KR 20070047072 A
- GB 1408819 A